# EUROPEAN PATENT SPECIFICATION

(11) **EP 1 877 279 B1**
(45) Date of publication and mention of the grant of the patent: **07.09.2011**
(21) Application number: 06733330.2
(22) Date of filing: 25.04.2006
(51) Int. Cl.: B60R 9/055

(54) **ROOF BOX FOR FASTENING AT A ROOF RACK OF A VEHICLE**
DACHKOFFER ZUR BEFESTIGUNG EINES DACHTRÄGERS EINES FAHRZEUGS
COFFRE DE TOIT A FIXER AU PORTE-BAGAGES DE TOIT D UN VEHICULE

(30) Priority: 27.04.2005 SE 0500957
(43) Date of publication of application: 16.01.2008
(73) Proprietor: Thule Sweden AB, 330 33 Hillerstorp (SE)
(72) Inventor: JOHANSSON, Jan-Erik, S-554 47 Jönköping (SE)
(74) Representative: Winqvist, Jens Pontus
(86) International application number: PCT/SE2006/000474
(87) International publication number: WO 2006/115450

(56) References cited:
- WO-A1-84/04074
- DE-A1- 2 442 104
- FR-A1- 2 711 595
- GB-A- 1 177 374
- GB-A- 2 228 669
- US-A- 3 000 418
- US-A- 3 000 419

## Description

The present invention refers to a roof box of essentially soft material, adopted to be removably attached to a roof rack of a vehicle, comprising an essentially rectangular bottom, a continuous side wall, which extends upwards from the bottom and an openable cover, which defines a loading space of the box, whereby the roof box has a reinforcement arranged in the bottom of the box, which is intended to abut against said roof rack and is dimensioned to carry intended load.

Through US 5 096 107 is a roof box or bag previously known, which is designed of a soft material. The roof box is intended to be mounted at a roof rack of a vehicle, comprising a firmly mounted roof rail at each side, which extends along the vehicle, and load carrier bars, which extend across the vehicle between the roof rails. The roof box is located between the roof rails and the load carrier bars and rests directly against the roof of the vehicle. The disadvantage with this is that the roof box may cause scratches or similar damages on the roof of the vehicle. To decrease the risk for damages some vehicles are provided with protecting stripes on the roof of the vehicle, which also is shown in the American patent. The previously known roof box is thus not usable for all vehicles.

It is also previously known to provide a vehicle with a loading basket arranged at a roof rack or integrated with the same. To load a roof box of soft material in the load basket is commonly known, but result in increased cost for the user, since the load basket is relatively expensive.

Through FR 2711595, which discloses a roof box according to the preamble of claim 1, is it previously known to provide a roof box of soft material with a detachable frame of longitudinally and transverse beams arranged on the bottom, to be able to mounting the roof box to a load carrier. The disadvantage with said roof box is that the frame must be removed before the roof box may be folded together at storage.

It is also generally known to fasten a roof box of rigid material at load carriers arranged at a vehicle. The disadvantage with a rigid roof box is that it is bulky at storage.

The purpose with the present invention is to achieve a roof box of soft or flexibility material which may be assembled on an optional load carrier and which may be stored on a simply manner compared with corresponding roof boxes of rigid material.

The present invention overcome the above mention disadvantages with a roof box of introductory mentioned kind which is characterised in that the reinforcement is integrated in a number of parallel channels in the bottom of the box, whereby the bottom with the integrated reinforcement is essentially rigid along a first longitudinal direction of the bottom and at least partly foldable along the other longitudinal direction of the bottom.

Preferably, the reinforcement is made of metal rods, arranged in said parallel channels in the bottom of the box. Alternately, the reinforcement may be designed of a number of plates pivoted to each other.

The invention shall hereafter be described closer with reference to a preferred embodiment as shown in the enclosed figures, in which:
Fig. 1 is a view in perspective of a vehicle provided with a box according the present invention.
Fig. 2 is a detail view of underside of the box according to figure 1.

The figures disclose a vehicle 1, with a roof rail 2 arranged along each side of the roof 3 of the vehicle. A front load carrier 4 and a rear load carrier 5 extend across the roof 3 of the vehicle. The load carriers 4 and 5 comprise a load carrier foot 6 fasten at each of the rails 2, and an intermediate load carrier bar 7. The roof rails 2 and load carriers 4 and 5 hereby forming a roof rack of the vehicle 1. Naturally, other types of roof racks may be used with the present invention, as an example, two load carriers may also form a roof rack at a vehicle without roof rails. In addition, the rails by itself are included in the expression roof rack.

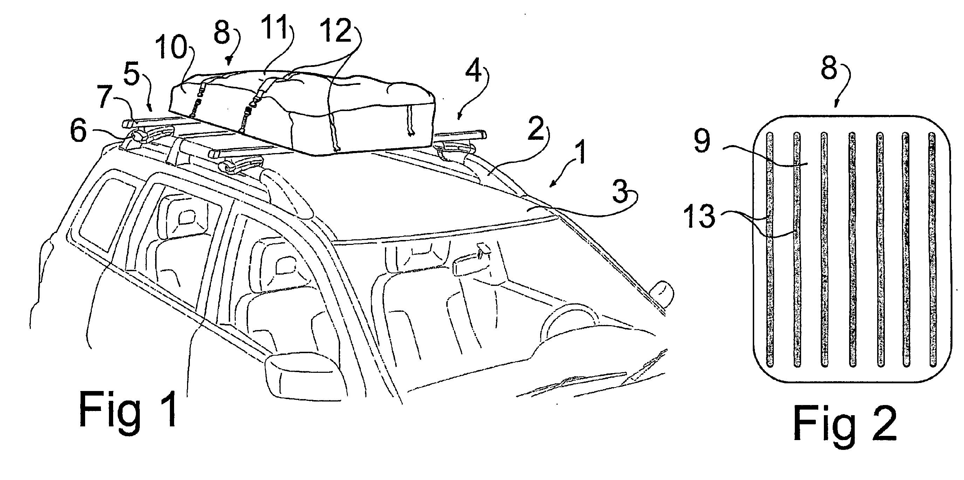

A roof box 8 according to the present invention is arranged on the load carriers 4 and 5. The roof box 8 may be designed as a bag, a case or similar, of vinyl coated polyester or similar soft or flexible material, which comprising an essential rectangular bottom 9, a continuous sidewall 10, which extends upwards from the bottom 9 and an openable cover 11, which define a loading space (not shown) for the box 8. Preferably, the roof box is welded or sewed together with sealed seams to protect against moisture. Also, a number of fastening devices 12 of known kind being schematically shown in figure 1, which in a known manner, being utilized to firmly tightening the box to a load carrier bar 7 or the roof rail 2. The cover 11 may be fastened, in a known manner, at the sidewall 10 with zippers or similar.

In figure 2 the underside of the bottom 9 of the box 8 being shown, wherein an integrated reinforcement 13 appears in the bottom 9 of the box 8. Said reinforcement 13 is intended to abut against said roof rack and is dimensioned to carry intended load, whereby the reinforcement 13 is essentially rigid along a first longitudinal direction of the bottom 9 and at least partly foldable along the other longitudinal direction of the bottom 9. It is thus possible to roll up or fold together the roof box 1, when it is not used.

Preferably, the box 8 is mounted on the load carriers 4 and 5, whereby the reinforcement 13 extends along with the vehicle 2, but the box 8 may also be mounted directly on the roof rails 2, whereby the reinforcement 13 extends across the vehicle 2.

Preferably, the reinforcement 13 is made of metal rods or another rigid material, as aluminium or armoured plastic. On the drawings, metal rods are arranged in a number of parallel channels in the bottom of the box. These channels may be closed or openable, in such way, that the metal rods may be taken out at folding of the box. The metal rods may be round bars with a diameter of 3 to 12 mm, but also other profiles may be used. Furthermore, at least the outermost located metal rods may have a fasting means in respectively end portion, adapted to the load carrier bar for fastening the roof box at the roof rack. As an example, a T-shaped projection from the metal rods may be guided into an existing T-track of the load carrier bar.

In an alternately embodiment, the reinforcement may be designed of a number of plates, pivoted to each other. Preferably, these plates are also inserted into channels or similar. Naturally, the reinforcement may also be firmly mounted in the bottom of the box with aid of rivet, gluing or similar.

## Claims

1. A roof box (1) of essentially soft material, adapted to be removably attached to a roof rack of a vehicle (2), comprising an essentially rectangular bottom (9), a continuous side wall (10), which extends upwards from the bottom (9) and an openable cover (11), which defines a loading space of the roof box (8), whereby the roof box (1) has a reinforcement (13) arranged in the bottom (9) of the box, which is intended to abut against said roof rack and is dimensioned to carry intended load, **CHARACTERISED in that** the reinforcement (13) is integrated in a number of parallel channels in the bottom of the box, whereby the bottom (9) with the integrated reinforcements (13) is essentially rigid along a first longitudinal direction of the bottom (9) and at least partly foldable along the other longitudinal direction of the bottom (9).

2. Roof box according to claim 1, **CHARACTERISED in that** the reinforcement (13) is made of metal rods or another rigid material.

3. Roof box according to claim 2, **CHARACTERISED in that** the reinforcement (13) is designed of a number of plates pivoted to each other.

4. Roof box according any of the claims 1 to 3, **CHARACTERISED in that** the reinforcement (13), at least in the outermost located metal rods, has a fastening means in respectively end portion, for fastening the roof box (1) to the roof rack.

5. Roof box according to claim 4, **CHARACTERISED in that** the fastening means comprises a T-shaped projection, which is intended to be guided in an existing T-track in a load carrier bar (7) of said roof rack.

## Patentansprüche

1. Dachkoffer (1) aus im Wesentlichen weichem Material, der angepasst ist, um abnehmbar an einem Dachträger eines Fahrzeugs (2) angebracht zu sein, aufweisend einen im Wesentlichen rechteckförmigen Boden (9), eine durchgehende Seitenwand (10), die sich von dem Boden (9) und einer zu öffnenden Abdeckung (11) erstreckt, die einen Laderaum des Dachkoffers (8) definiert, wobei der Dachkoffer (1) einen in dem Boden (9) des Koffers angeordnete Verstärkung (13) aufweist, die dazu bestimmt ist, an dem Dachträger anzuliegen und ausgelegt ist, um die vorgesehene Ladung zu tragen, **dadurch gekennzeichnet, dass** die Verstärkung (13) in einer Anzahl von parallelen Kanälen im Boden des Koffers integriert ist, wodurch der Boden (9) mit den integrierten Verstärkungen (13) entlang einer ersten Längsrichtung des Bodens (9) im Wesentlichen steif ist und zumindest teilweise entlang der anderen Längsrichtung des Bodens (9) faltbar ist.

2. Dachkoffer gemäß Anspruch 1, **dadurch gekennzeichnet, dass** die Verstärkung (13) aus Metallstäben oder einem anderen steifen Material hergestellt ist.

3. Dachkoffer gemäß Anspruch 2, **dadurch gekennzeichnet, dass** die Verstärkung (13) aus einer Anzahl drehbar zueinander gelagerter Platten aufgebaut ist.

4. Dachkoffer gemäß einem der Ansprüche 1 bis 3, **dadurch gekennzeichnet, dass** die Verstärkung (13) zumindest bei den am äußersten angeordneten Metallstäben jeweils im Endabschnitt ein Befestigungsmittel zum Befestigen des Dachkoffers (1) an dem Dachträger aufweist.

5. Dachkoffer gemäß Anspruch 4, **dadurch gekennzeichnet, dass** die Befestigungsmittel einen T-förmigen Vorsprung aufweisen, der ausgelegt ist, um in einer vorhandenen T-Führung in einer Lastträgerschiene (7) des Dachträgers geführt zu werden.

## Revendications

1. Coffre de toit (1) en un matériau sensiblement souple, conçu pour être fixé, de manière amovible, à une galerie de toit de véhicule (2), comprenant un fond sensiblement rectangulaire (9), une paroi latérale continue (10), qui s'étend vers le haut depuis le fond (9) et un couvercle pouvant s'ouvrir (11), qui définit un espace de chargement du coffre de toit (8), grâce à quoi le coffre de toit (1) comporte un renfort (13) agencé dans le fond (9) du coffre, qui est destiné à buter contre ladite galerie de toit et est dimensionné pour supporter la charge prévue, **caractérisé en ce que** le renfort (13) est intégré en un nombre de canaux parallèles dans le fond du coffre, grâce à quoi le fond (9) aux renforts intégrés (13) est sensiblement rigide le long d'une première direction longitudinale du fond (9) et, au moins en partie, pliable le long de l'autre direction longitudinale du fond (9).

2. Coffre de toit selon la revendication 1, **caractérisé en ce que** le renfort (13) est fait de tiges de métal ou d'un autre matériau rigide.

3. Coffre de toit selon la revendication 2, **caractérisé en ce que** le renfort (13) est constitué d'un nombre de plaques pivotant les unes par rapport aux autres.

4. Coffre de toit selon l'une quelconque des revendications 1 à 3, **caractérisé en ce que** le renfort (13), au moins dans les tiges de métal situées le plus vers l'extérieur, comporte un moyen de fixation dans la partie d'extrémité respective, pour fixer le coffre de toit (1) à la galerie de toit.

5. Coffre de toit selon la revendication 4, **caractérisé en ce que** le moyen de fixation comprend une saillie en forme de T, qui est destinée à être guidée dans une glissière en forme de T existante dans une barre de support de charge (7) dudit coffre de toit.
